# EUROPÄISCHE PATENTSCHRIFT

(11) **EP 3 213 260 B1**
(45) Veröffentlichungstag und Bekanntmachung des Hinweises auf die Patenterteilung: **15.05.2019**
(21) Anmeldenummer: 15780828.8
(22) Anmeldetag: 13.10.2015
(51) Int. Cl.: G06K 9/62, B60W 40/04, G06T 9/20, H04N 19/17, G06K 9/00, B60W 50/06

(54) **VERFAHREN UND VORRICHTUNG ZUR LOKALISIERUNG EINES FAHRZEUGS IN SEINEM UMFELD**
METHOD AND DEVICE FOR LOCALIZING A VEHICLE IN THE ENVIRONMENT THEREOF
PROCÉDÉ ET DISPOSITIF POUR LOCALISER UN VÉHICULE DANS SON ENVIRONNEMENT

(30) Priorität: 28.10.2014 DE 102014221888
(43) Veröffentlichungstag der Anmeldung: 06.09.2017
(73) Patentinhaber: Robert Bosch GmbH, 70442 Stuttgart (DE)
(72) Erfinder: NORDBRUCH, Stefan, 70806 Kornwestheim (DE); HASBERG, Carsten, 74360 Ilsfeld-Auenstein (DE)
(86) Internationale Anmeldenummer: PCT/EP2015/073641
(87) Internationale Veröffentlichungsnummer: WO 2016/066419

(56) Entgegenhaltungen:
- EP-A2- 1 669 273
- DE-A1-102009 044 284
- DE-A1-102010 002 092
- DE-A1-102012 211 391
- DE-A1-102012 219 637

## Beschreibung

Die vorliegende Erfindung betrifft eine Vorrichtung und ein Verfahren, nach Art des Vorrichtungsanspruchs 1 bzw. des Verfahrensanspruchs 9, zur Lokalisierung eines Fahrzeugs in seinem Umfeld, wobei das Fahrzeug über Umfeldsensoren verfügt, die zu ersten Zeitpunkten Umgebungsansichten mittels Umfeldsensoren erfassen und einer Auswerteeinrichtung zuführen, sowie weiterhin über eine Kommunikationsschnittstelle verfügt, über die der Auswerteeinrichtung aktuelle Umgebungsdaten zu zweiten Zeitpunkten bezüglich des momentanen Fahrzeugumfeldes des Fahrzeuges übertragen werden. Die Lokalisierung des Fahrzeugs erfolgt dadurch, dass in der Auswerteeinrichtung die Umfelddaten, die durch die Umfeldsensoren zu ersten Zeitpunkten erfasst wurden, und den zeitlich korrespondierenden Umfelddaten, die über die Kommunikationsschnittstelle übertragen wurden, miteinander überlagert werden. Wenn erkannt wird, dass Merkmale in den mittels den Sensoren erfassten Umfelddaten und/oder Merkmale, in denen über die Kommunikationsschnittstelle zugeführten Umgebungsdaten mehrfach in den zu einem Zeitpunkt gehörende Daten vorkommen und diese ein oder mehrere Objekte repräsentieren, werden diese nur einmal zu der Auswerteeinrichtung übertragen und bei wiederholtem Auftreten der Merkmale in den zu einem Zeitpunkt gehörenden Daten werden nur diese Positionsdaten des wiederholt auftretenden Objekts erneut übertragen.

### Stand der Technik

Aus der DE 10 2004 075 922 A1 ist eine Einrichtung zur Übertragung von Bilddaten von einer in einem Fahrzeug angeordneten Videokamera zu einer in einem Fahrzeug von der Videokamera entfernt angeordneten Bildauswertungseinrichtung bekannt, wobei in räumlicher Nähe zur Videokamera eine Einrichtung zur Datenreduktion vorgesehen ist, welche von der Videokamera erzeugte Bilddaten an die Bildauswertungseinrichtung angepasst reduziert und die reduzierten Bilddaten zur Bildauswertungseinrichtung gesendet werden.

Aus der DE 10 2012 211391 A1 ist ein Verfahren zur Informationsnutzung bekannt, bei welchem mittels Sensoren einer ersten und zweiten Sensorgattung erste und zweite Sensordaten erfasst werden und identische Objekte bzw. Objektattribute beschreibende Informationen in den ersten und zweiten Sensordaten einander zugeordnet werden, wobei außerdem die ersten und die zweiten Sensordaten erste und zweite Unschärfebehaftungen aufweisen und wobei weiterhin Werte der zweiten Unschärfebehaftungen mindestens so groß sind wie Werte der ersten Unschärfebehaftungen. Das Verfahren zeichnet sich dadurch aus, dass ein Vergleich der Werte der ersten und der zweiten Unschärfebehaftungen identische Objekte und/oder Objektattribute beschreibender Informationen in den ersten und den zweiten Sensordaten erfolgt, wobei bei im Wesentlichen gleichgroßen Werten die identische Objekte bzw. Objektattribute beschreibenden Informationen in den ersten und den zweiten Sensordaten einander zugeordnet werden und wobei bei im Wesentlichen nicht gleichgroßen Werten die identische Objekte und/oder Objektattribute beschreibende Informationen in den ersten Sensordaten durch die zweiten Sensordaten bestätigt oder verworfen werden. Die Erfindung betrifft weiterhin ein entsprechendes System sowie dessen Verwendung.

Aus der DE 10 2009 044284 A1 ist ein Verfahren zur Fahrspurerkennung bekannt, bei dem mindestens ein Bild einer Sequenz von digitalisierten Bildern einer Fahrbahn mit den folgenden Schritten verarbeitet wird: -Ermitteln einer Fahrspur auf Basis der ermittelten multiplen Bildeigenschaften.

Weiterer Stand der Technik kann bilden die DE 10 2010 002092 A1 und DE 10 2012 219637 A1.

### Kern und Vorteile der Erfindung

Moderne Fahrerassistenzsysteme und Fahrzeugführungssyteme, die Fahrzeuge hochautomatisiert oder autonom führen, benötigen eine möglichst exakte Lokalisierung des Fahrzeugs in seinem Umfeld. Der Kern der vorliegenden Erfindung ist es, die Lokalisierung eines Fahrzeugs in seinem Umfeld zu verbessern, indem Umgebungsansichten des Fahrzeugs mittels Umfeldsensoren erfasst werden und Auswerteeinrichtungen zugeführt werden. Über eine Kommunikationsschnittstelle werden aktuelle Umgebungsdaten bezüglich des momentanen Fahrzeugumfeldes übertragen und damit eine hochgenaue Lokalisierung des Fahrzeugs ermöglicht, wobei gleichzeitig die Datenübertragung von den Umfeldsensoren zur Auswerteeinrichtung und/oder die Datenübertragung von der Kommunikationsschnittstelle zur Auswerteeinrichtung und/oder die Datenübertragung von Infrastruktureinrichtungen zur Kommunikationsschnittstelle des Fahrzeugs reduziert werden können, ohne hierbei Einbußen hinsichtlich der übertragenen Information hinnehmen zu müssen.

Erfindungsgemäß wird dieses durch die Kombination der Merkmale der unabhängigen Ansprüche gelöst. Vorteilhafte Weiterbildungen und Ausgestaltungen ergeben sich aus den Unteransprüchen.

Dabei werden Merkmale in der Bildinformation, die beispielsweise von einer im Fahrzeug angebrachten Videokamera zu einer ebenfalls im Fahrzeug angebrachten Auswerteeinrichtung übertragen werden, mehrfach übertragen. Bei der Übertragung dieser Information muss jedes dieser Bildmerkmale für sich übertragen werden, was die Menge an zu übertragender und zu verarbeitender Information sehr groß macht. Dadurch, dass jedes dieser Bildmerkmale nur einmal übertragen wird und bei wiederholtem Auftreten dieser Merkmale im Bild nur die neue Position des Merkmals in diesem Bild zusätzlich mitübertragen wird, kann man den Umfang der zu übertragenden und auszuwertenden Bildinformation deutlich reduzieren.

Die beschriebene Idee ist dabei nicht nur auf eine Videosensorik und die Übertragung von Bildinformation beschränkt, sondern kann ebenso Stereo-Videosensorik oder Radarsensorik, Lidarsensorik, Ultraschallsensorik oder eine Kombination hieraus, übertragen werden, indem entsprechende Merkmale der Objektdetektion im Fahrzeugumfeld, mittels der sich auf die Objektart schließen lässt, übertragen und weiterverarbeitet werden.

Vorteilhafter Weise handelt es sich bei den mehrfach in einer Sensoransicht vorhandenen Merkmalen um Objekte wie Zebrastreifenbalken, Leitplankenabschnitte, Leitplankenständer an denen die Leitplanken befestigt sind, unterbrochene Fahrstreifenmarkierungen zur Abgrenzung benachbarter Fahrbahnen, Leitpfosten die den Rand der Fahrbahn markieren, Richtungspfeile auf der Fahrbahn, die die Fahrtrichtung auf der entsprechenden Fahrbahn signalisieren oder ähnliche, mehrfach und wiederholt auftretende Merkmale innerhalb der Sensorinformation. Dabei kann es vorgesehen sein, dass die entsprechenden Charakteristiken in der Sensorinformation vor Inbetriebnahme des erfindungsgemäßen Verfahrens festgelegt und einprogrammiert werden. Weiterhin ist auch denkbar, dass im Rahmen der Erfindung ein Algorithmus abläuft, der regelmäßig wiederkehrende Objektmuster in der Sensorinformation sucht und, sofern diese Objekte hinreichend oft auftreten, die entsprechenden Objetcharakteristiken selbst durch diese Software extrahiert werden und in einer Datenbank der mehrfach vorhandenen Merkmale abgespeichert und ergänzt werden, so dass die Anzahl der mehrfach vorhandenen Merkmale stetig erhöht werden kann und an die jeweilige Situation angepasst werden kann.

Weiterhin ist es vorteilhaft, dass die häufigen und regelmäßig auftretenden Merkmale in den Sensordaten mittels eines auf das eine oder auf die mehreren Objekte angepassten Filters ermittelt werden. Hierzu eignet sich insbesondere die Verwendung eines Kammfilters oder eines Datenverarbeitungsalgorithmusses, der in der Lage ist, regelmäßig wiederkehrende Muster zu erkennen.

Weiterhin ist es vorteilhaft, dass die ersten Zeitpunkte und die zweiten Zeitpunkte identisch sind. Hierdurch wird erreicht, dass die Daten zur Lokalisierung des Fahrzeugs, die einmal mittels des Sensors von dem Fahrzeugumfeld gewonnen wurden und die zum zweiten über eine Kommunikationsschnittstelle empfangen werden, identische Zeitpunkte betreffen und damit beide Informationsquellen den gleichen Zeitpunkt beschreiben und damit überlagert werden können. Hierdurch ist es möglich, den Aufenthaltsort des Fahrzeugs in seiner Umgebung noch genauer zu bestimmen.

Weiterhin ist es möglich, dass die Lokalisierung des Fahrzeugs eine hochgenaue Lokalisierung ist und das Fahrzeug autonom oder automatisiert in der momentanen Fahrzeugumgebung selbständig, also ohne Fahrereingriff bewegt werden kann. Bei automatisierten oder autonomen Fahreingriffen, bei denen der Fahrer nicht direkt an der Fahraufgabe beteiligt ist, ist eine hochgenaue Kenntnis des Fahrzeugumfeldes notwendig, wozu die Überlagerung mehrerer Informationen unterschiedlicher Informationsquellen vorteilhaft verwendet werden kann.

Weiterhin ist es vorteilhaft, dass die hochgenaue Lokalisierung eine Bestimmung des momentanen Aufenthaltsortes des Fahrzeugs in seinem Fahrzeugumfeld mit einer Genauigkeit von etwas +/- 10 Zentimeter ist. Diese Genauigkeit ist besonders vorteilhaft, da sie dem Abstandschätzvermögen eines menschlichen Fahrers sehr nahe kommt.

Weiterhin ist es vorteilhaft, dass das Verfahren zusätzlich ein GPS-Signal oder ein DGPS(Differential-GPS)-Signal verwendet. Alternativ zum GPS(Global Positioning System)-Signal kann auch ein Glonass-Signal, ein Eureka-Signal ode ein Signal eines anderen Satelittenortungssystems verwendet werden oder mehrere diese Signale zugleich.

Weiterhin ist vorteilhaft, dass die Umfelddaten von einer Sensorik erfasst werden, die eine Radarsensorik, eine Lidarsensorik, eine Videosensorik, eine Ultraschallsensorik oder eine Kombination aus diesen Sensorarten ist. Insbesondere im Kontext des autonomen oder automatisierten Fahrens ist eine Kombination mehrerer, voneinander unterschiedlicher Sensorarten notwendig, die durch Überlagerung eine vertrauenswürdige Situation des Fahrzeugumfeldes bereitstellen kann.

Weiterhin ist es vorteilhaft, dass die aktuellen Umgebungsdaten, die über die Kommunikationsschnittstelle an das Fahrzeug übertragen werden, Umfelddaten sind, die von Fahrzeugsensoriken von anderen Fahrzeugen erfasst wurden. Dabei sind die anderen Fahrzeuge Verkehrsteilnehmer, die die gleiche Fahrzeugumgebung kurz vor dem eigenen Fahrzeug befuhren, und dabei mittels ihren Fahrzeugsensoriken Umfelddaten gesammelt haben und diese über eine Kommunikationsschnittstelle an einen Daten-Infrastrukureinrichtung gesendet haben. Das eigene Fahrzeug, das zum jetzigen Zeitpunkt die gleiche Fahrzeugumgebung befährt, erhält über die Infrastruktureinrichtung die vorher erfassten Daten und kann damit die eigene Fahrzeugposition hochgenau ermitteln. Dabei ist wichtig, dass nur die Daten verwendet werden, die noch immer aktuell sind, also von Fahrzeugsensoriken stammen, deren Fahrzeuge die gleiche Fahrzeugumgebung erst kürzlich befuhren. Besonders Vorteilhaft ist es, wenn die Zeitdauer, innerhalb der die Umfelddaten als noch immer aktuell angesehen werden, ein Zeitraum bis maximal 5 Minuten, 10 Minuten oder 15 Minuten beträgt. Vorteilhafterweise können Umfelddaten, die älter als dieser Zeitraum sind, nicht mehr als aktuell betrachtet werden und samit auch nicht mehr berücksichtigt werden.

Weiterhin ist es vorteilhaft, dass die aktuellen Umfelddaten Informationen sind, die von Fahrzeugsensoriken von Fahrzeugen erfasst und bereitgestellt wurden, die vorher die gleiche Fahrzeugumgebung erfasst haben. Hierdurch hat man einen Infrastrukturdienst, der automatisch aktuelle Umfeldsituationen erfasst und für nachfolgende Fahrzeuge bereitstellt, wobei die nachfolgenden Fahrzeuge wiederum Daten erfassen und diese für Fahrzeuge, die die gleiche Stelle zu einem späteren Zeitpunkt passieren wiederum bereitstellen. Durch diese Maßnahme kann man Daten bezüglich sich verändernden Umgebungssituationen aktualisieren und stets aktuelle Daten bereitstellen. Diese Daten werden auf einen Datenserver hochgeladen, gespeichert und für das Herunterladen durch andere Verkehrsteilnehmer, die den gleichen Streckenabschnitt zu einem späteren Zeitpunkt befahren, bereitgehalten.

Weiterhin ist es vorteilhaft, dass die Kommunikationsschnittstelle eine Mobilfunkverbindung oder ein digitales Rundfunknetz oder ein Fahrzeug-zu-Infrastur-Netzwerk (C2I-Netzwerk) oder ein Fahrzeug -zu-Fahrzeug-Netzwerk (C2C-Netzwerk) oder eine Schnittstelle zu einem Navigationssystem ist. Als Navigationssystem kann insbesondere ein Fahrzeug mit gespeicherter digitaler Karte vorgesehen sein, oder ein Fahrzeug, das auf digitale Kartendaten vollständig oder zumindest teilweise über eine Schnittstelle zu einer Datencloud zugreift.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

### Zeichnungen

Nachfolgend werden Ausführungsbeispiele der Erfindung an Hand von Zeichnungen erläutert.

Es zeigt
- Fig. 1: ein schematisches Blockschaltbild einer Ausführungsform der erfindungsgemäßen Vorrichtung,
- Fig. 2: eine beispielhafte Ansicht von Sensordaten zur Erläuterung des erfindungsgemäßen Verfahrens,
- Fig. 3: ein schematisches Ablaufdiagramm des erfindungsgemäßen Verfahrens und
- Fig. 4: ein weiteres schematisches Ablaufdiagramm einer weiteren Ausführungsform des erfindungsgemäßen Verfahrens.

### Beschreibung von Ausführungsbeispielen

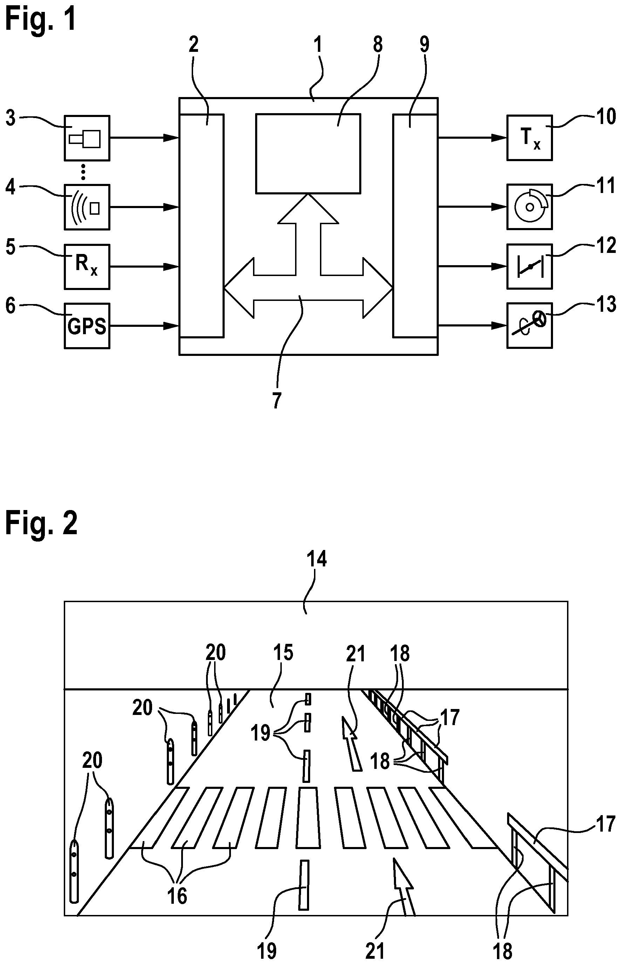

In Fig. 1 ist eine Auswerteeinrichtung 1 dargestellt, die vorteilhafterweise innerhalb des Fahrzeugs angeordnet ist, alternativerweise aber auch außerhalb des Fahrzeugs in der Nähe oder auf einem externen Server vorgesehen sein kann. Diese Auswerteeinrichtung 1 umfasst eine Eingangsschaltung 2, mittels der der Auswerteeinrichtung 1 Eingangsdaten zuführbar sind. Als Eingangsdaten werden der Eingangsschaltung 2 Signale einer ersten Umfeldsensorik 3 zugeführt, die beispielsweise eine Videosensorik sein kann, die das Fahrzeugumfeld vor dem Fahrzeug erfasst. Weiterhin werden der Eingangsschaltung 2 Daten einer zweiten Umfeldsensorik 4 zugeführt, wobei die Anzahl an Umfeldsensoriken nicht auf zwei beschränkt sein muß, sondern beliebig viele verschiedene Sensorarten umfassen kann. Im dargestellten Ausführungsbeispiel ist die zweite Umfeldsensorik als Radarsensorik ausgeführt. Als weitere Umfeldsensoriken können eine Lidarsensorik und/oder eine Ultraschallsensorik vorgesehen sein, die das Fahrzeugumfeld erfassen und der Eingangsschaltung 2 zuführen. Weiterhin werden der Eingangsschaltung 2 Daten einer Empfangsantenne 5 zugeführt. Diese Empfangsantenne 5 umfasst eine Antenne und eine Empfangseinrichtung und erhält im Fall einer Car-to-Car-Lösung (C2C) Daten von anderen Verkehrsteilnehmern oder im Fall einer Car-to-Infrastructure-Lösung (C2I) Daten von Infrastruktureinrichtungen, die Umgebungsinformationen sammelt und bereithält, die von Fahrzeugen die das momentane Fahrzeugumfeld kurze Zeit vorher befahren haben, stammen und ihre ermittelten Umfelddaten dem Infrastrukturdienst oder anderen Fahrzeugteilnehmern direkt übermittelten. Weiterhin wird der Eingangsschaltung 2 ein Positionssignal zugeführt, das von einer Positionsbestimmungseinrichtung 6 stammt. Diese Positionsbestimmungseinrichtung 6 kann beispielsweise ein Satellitenortungssystem sein, das aufgrund von Satellitenempfangssignalen die eigenen Positionskoordinaten ermittelt oder mittels eines anderen nichtsatellitengestützten Positionssignals die momentane Fahrzeugsituation feststellen kann. Die der Eingangsschaltung 2 zugeführten Daten werden mittels einer Datenaustauscheinrichtung 7, die insbesondere ein Datenbus sein kann, einer Berechnungseinrichtung 8 zugeführt, die als Mikroprozessor, digitaler Signalprozessor oder ASIC ausgeführt sein kann. Auf dieser Berechnungseinrichtung 8 läuft das erfindungsgemäße Verfahren, vorteilhafterweise in Form von Software ab und ermittelt aus den zugeführten Eingangsdaten Ausgangssignale, die von der Berechnungseinrichtung 8 über die Datenaustauscheinrichtung 7 an die Ausgangsschaltung 9 weitergeleitet werden. Über die Ausgangsschaltung 9 wird beispielsweise ein Ausgangssignal an eine Sendeantenne 10 gesendet, wodurch die in der Berechnungseinrichtung 8 ermittelten, momentanen Umfelddaten anderen Verkehrsteilnehmern oder einem Infrastrukturdienst, der beispielsweise als externer Datenserver ausgeführt sein kann, zugeführt werden. Weiterhin ist vorgesehen, dass durch die Ausgangsschaltung 9 Steuerungssignale an die Verzögerungseinrichtungen 11 des Fahrzeugs ausgegeben werden, wenn die Berechnungseinrichtung 8 ermittelt hat, dass die momentane Fahrzeuggeschwindigkeit reduziert werden soll. Weiterhin ist vorgesehen, dass die Ausgangsschaltung 9 Ausgangssignale an ein leistungsbestimmendes Stellelement 12 des Fahrzeugantriebs ausgibt, wenn die Berechnungseinrichtung 8 festgestellt hat, dass die momentane Fahrzeuggeschwindigkeit erhöht werden soll. Als weiteres Ausgangssignal ist vorgesehen, dass die Ausgangsschaltung 9 ein Stellsignal an einen Lenkungssteller 13 ausgibt, wodurch die Fahrzeugräder in ihrem Lenkwinkel verändert werden können und die momentan befahrene Richtung des Fahrzeugs verändert werden kann. Die mittels der Umfeldsensoriken 3 bzw. 4 erfassten Objekte im Fahrzeugumfeld werden in Form von Objektdaten der Eingangsschaltung 2 zugeführt, wobei ein mehrfach im Bild vorkommendes Objekt, das beispielsweise ein Zebrastreifenbalken, eine durchbrochene Fahrspurmarkierung oder ein Leitplankenabschnitt sein kann, nur einmal übertragen wird und bei wiederholtem Auffinden dieses Objekts in den Objektdaten lediglich die Position und die Art des erkannten Objekts erneut übertragen wird. Diese Art der Datenreduktion ist ebenfalls für die Übermittlung von aktuellen Umgebungsdaten über die Empfangseinrichtung 5 möglich sowie für die Übertragung von der Empfangseinrichtung 5 zur Eingangsschaltung 2 möglich. Auch für die Übertragung derartiger, mehrfach vorhandener Objekte von der Ausgangsschaltung 9 zur Sendeeinrichtung 10 bzw. von der Sendeeinrichtung 10 zu anderen Verkehrsteilnehmern oder zu einem externen Datendienst, ist diese Art der Datenreduktion anwendbar. Dadurch kann die Übertragungsgeschwindigkeit und die Verarbeitungsgeschwindigkeit erhöht werden.

In Fig. 2 ist eine beispielhafte Umfeldansicht des Fahrzeugs dargestellt, wie es mit einer nach vorne ausgerichteten Videokamera erfasst werden kann. Hierbei ist ein Bildausschnitt 14 dargestellt, der perspektivisch die befahrene Straße in Fahrtrichtung anzeigt. Dabei ist die vorausbefindliche Fahrbahn 15 gezeigt, die in ihrer Mitte durch unterbrochene Fahrstreifenmarkierungen 19 und an den Rändern durch Leitplanken 17, 18 sowie durch Leitpfosten 19 begrenzt werden. Weiterhin ist im erkannten Fahrzeugumfeld ein Zebrastreifen 16 dargestellt sowie Richtungspfeile 21 auf der Fahrbahn angebracht. Merkmale in dieser Sensoransicht, die mehrfach vorhanden sind können bei ihrer Übertragung an nachgeordnete Auswerteeinrichtungen in ihrem Datenvolumen erfindungsgemäß reduziert werden, indem diese Objekte nur einmal übertragen werden und bei wiederholtem Vorkommen nur deren neue Position und ihre Objektart zu übertragen ist. Als Objektart ist zu verstehen, ob es sich um Richtungspfeile, Leitpfosten oder umähnliche Objekte handelt. Im dargestellten Beispiel besteht der Zebrastreifen durch mehrere, horizontal nebeneinander angeordnete Zebrastreifenbalken 16, deren Form, Farbe, Beschaffenheit und Größe identisch sind, sofern die perspektivische Ansicht in eine Draufsicht umgerechnet wird. Erfindungsgemäß wird ein derartiger Zebrastreifenbalken 16 an die nachgeordnete Berechnungseinrichtung 8 nur einmal übertragen, und bei Übertragung der weiteren Bildinhalte bei Wiedererkennen des gleichen Objekts, also im vorliegenden Fall bei Wiedererkennung eines weiteren Zebrastreifenbalkens 16, nur die Information übertragen wird, dass es sich wiederum um einen Zebrastreifenbalken 16 handelt, sowie die neu erkannte Position des wiederholten Auftretens. Ebenso kann im dargestellten Bildausschnitt der Leitplankenabschnitt 17 zwischen zwei Leitplankenpfosten als ein erfindungsgemäßes Objekt erkannt werden und nur einmal übertragen werden und bei wiederholtem Auftauchen dieses Leitplankenabschnitts 17 eine Datenreduktion vorgenommen werden. Ebenso können im dargestellten Bildabschnitt die Daten des Leitplankenpfostens 18 nur einmal übertragen werden müssen und bei wiederholtem Auftauchen der Leitplankenpfosten 18 im Bildausschnitt 14 nur deren erneute Position übertragen werden. In gleicher Weise kann die unterbrochene Fahrstreifenmarkierung 19, die die beiden Fahrbahnen voneinander trennt, ebenfalls in gleicher Weise eine Datenreduktion zur Übertragung der Bildinformation genutzt werden. Als weiteres Beispiel ist am linken Fahrstreifenrand eine Abfolge von Leitpfosten 20 dargestellt, die in ihrer Beschaffenheit ebenfalls identisch sind und weshalb das erfindungsgemäße Reduktionsverfahren auch darauf angewendet werden kann. Als weiteres Objekt im Bildausschnitt 14 ist ein Richtungspfeil 21 auf der Fahrbahn dargestellt, der in regelmäßigen Abständen erfasst wird und beispielsweise eine genaue Lokalisierung des Fahrzeugs in Querrichtung ermöglicht, sofern Navigationsdaten verfügbar sind, die die Anzahl und Richtung der vorhandenen Fahrspuren zur Verfügung stellt.

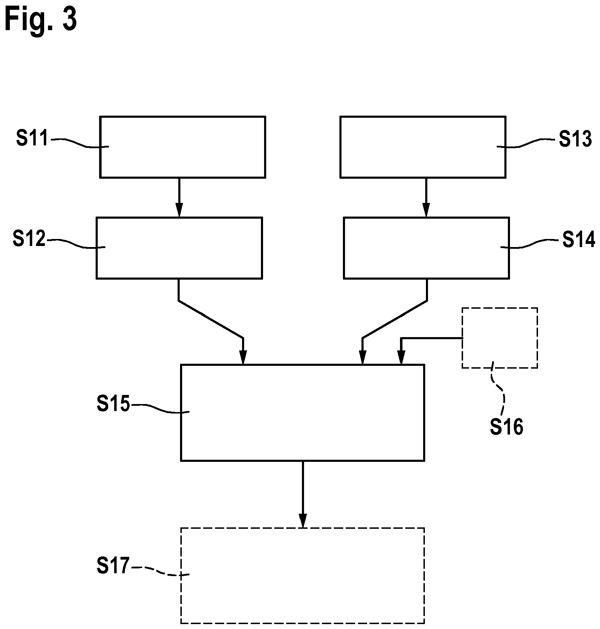

In Fig. 3 ist ein erstes Ausführungsbeispiel des erfindungsgemäßen Verfahrens mittels eines Flussdiagramms dargestellt. Das dargestellte Ablaufdiagramm ist aber schematisch und wird während dem Fahrbetrieb des Fahrzeugs ständig erneut durchlaufen. Hierzu ist vorgesehen, dass in Schritt S11 eine Umfeldansicht mittels eines Fahrzeugsensoriksystems 3, 4 erfasst wird. Vor dem Übermitteln der Fahrzeugumfelddaten an die Eingangsschaltung 2 der Auswerteeinrichtung 1 wird im Schritt S12 ermittelt, ob bestimmte Objektmerkmale in den Sensorikdaten mehrfach vorkommen, beispielsweise indem mehrere Leitpfosten 20, mehrere Zebrastreifenbalken 16, mehrere Fahrspurmarkierungen 19, mehrere Leitplankenpfosten 18, mehrere Leitplankenabschnitte 17 oder mehrere Richtungspfeile 21 vorhanden sind. Wurde erkannt, dass der derartige Merkmale mehrfach vorkommen, so wird zur Übermittlung der Daten an die Eingangsschaltung 2 der Auswerteeinrichtung 1 das Datenaufkommen reduziert, indem jedes dieser Merkmale nur einmal übertragen wird und bei wiederholtem Vorkommen dieser Objekte in den Umfelddaten nur deren Art und deren erneute Position in der Umgebungsansicht erneut zu übertragen ist. Gleichzeitig werden gemäß Schritt S13 von einem anderen Fahrzeug oder einem externen Datendienst Umfelddaten empfangen, die beispielsweise aktuelle Umgebungsdaten sind, die kurz vorher von einem Fahrzeug bereitgestellt wurden, das die gleiche Fahrzeugumgebung befahren hat. Im darauffolgenden Schritt S14 wird ebenfalls innerhalb der Umfelddaten nach einem mehrfachen Vorkommen bestimmter Objekte gesucht, so dass zur Ermittlung der Umfelddaten vom Datenserver zur Kommunikationsschnittstelle des Fahrzeugs sowie oder alternativ von der Kommunikationsschnittstelle des Fahrzeugs zur Auswerteeinrichtung 1 eine Datenreduktion vorgenommen werden kann. In der Auswerteeinrichtung 1 werden daraufhin sowohl die Fahrzeugsensorikdaten, als auch die bereitgestellten Fahrzeugumfelddaten in Schritt S15 miteinander überlagert, so dass man aufgrund der Überlagerung beider Datenquellen eine exakte Lokalisierung des Fahrzeugs im Fahrzeugumfeld vornehmen kann. Optional kann weiterhin vorgesehen sein, dass ein Satellitennavigationssignal, beispielsweise ein GPS-Signal, ein DGPS(Differential-GPS)-Signal, ein Glonass-Signal oder ein Eureka-Signal zusätzlich verwendet wird, um die Lokalisierung des Fahrzeugs in der Fahrzeugumgebung möglichst genau vornehmen zu können. Da Schritt S16 optional vorgesehen ist, ist dessen Umrahmung in Fig. 3 nur gestrichelt dargestellt. Weiterhin kann Schritt S17 ebenfalls optional vorgesehen sein, weshalb auch dieser nur gestrichelt in Fig. 3 dargestellt ist. Gemäß dem optionalen Schritt S17 kann vorgesehen sein, dass die aktuell im Fahrzeug vorhandenen Umfelddaten mit der hochgenauen Fahrzeuglokalisierung über eine Sendeeinrichtung 10 anderen Verkehrsteilnehmern zur Verfügung gestellt werden, die innerhalb der nächsten Zeit die gleiche Fahrzeugumgebung passieren, indem diese Daten direkt an Empfangseinrichtungen der Fahrzeuge mittels eines Fahrzeug-zu-Fahrzeug-Netzwerks übertragen werden oder indirekt auf auf einem externen Datenserver mittels Fahrzeug-zu-Infrastruktur-Kommunikation übertragen werden, dort aktualisiert werden und für andere Verkehrsteilnehmer zum Abruf bereit gehalten werden.

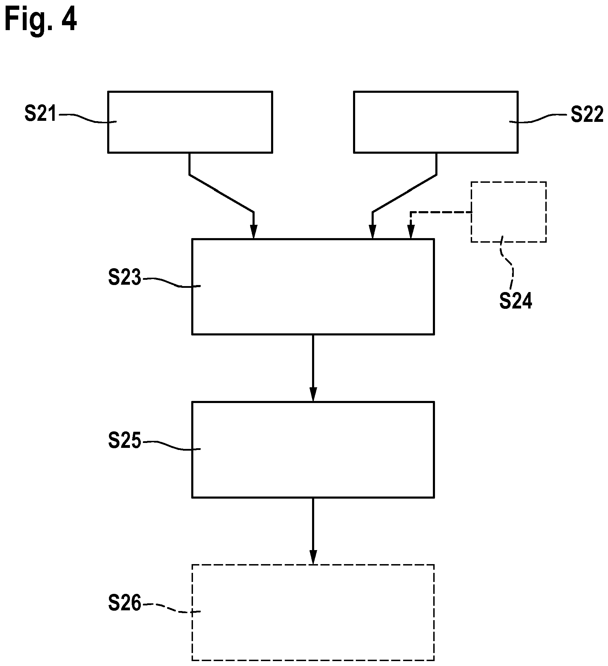

In Fig. 4 ist eine weitere Ausführungsform des erfindungsgemäßen Verfahrens dargestellt, wobei hier die Sensorikdaten nicht vor der Übermittlung an die Auswerteeinrichtung 1 reduziert werden, sondern erst nach der Überlagerung der Sensorikdaten mit den Umfelddaten, also vor dem Bereitstellen für andere Verkehrsteilnehmer, eine Datenreduktion vorgenommen wird. Damit ist das Verfahren nach Fig. 4 alternativ zum Verfahren zu Fig. 3 oder aber auch in Kombination mit diesem verwendbar.

In Schritt S21 der Fig. 4 werden wiederum mittels einer Fahrzeugsensorik 3, 4 Umfelddaten im Fahrzeugumfeld ermittelt und diese von der Fahrzeugsensorik 3, 4 an die Eingangsschaltung 2 der Auswerteeinrichtung 1 übertragen. Zeitgleich werden gemäß Schritt S22 Daten von Verkehrsteilnehmern empfangen, die die gleiche Fahrzeugumgebung vor Kurzem passiert haben und deren Daten noch aktuell sind. Hierzu wird von diesen Fahrzeugen direkt an das eigene Fahrzeug eine Übertragung der Umfelddaten vorgenommen oder aber indirekt über einen externen Datenserver die aktualisierten Daten der anderen Verkehrsteilnehmer durchgeführt, so daß auf dem Datenserver die aktualisierten Daten hochgeladen werden und dort für andere Verkehrsteilnehmer bereitgehalten werden. Diese externen Fahrzeugdaten, die das Fahrzeugumfeld beschreiben, werden über eine Empfangseinrichtung 5 des Fahrzeugs empfangen und über die Eingangsschaltung 2 der Auswerteeinrichtung 1 zugeführt. In der Auswerteeinrichtung 1 wird gemäß Schritt S23 die Überlagerung der Sensorikdaten mit den extern bereitgestellten Umfelddaten vorgenommen, wodurch eine exakte Positionierung des Fahrzeugs im Fahrzeugumfeldbereich ? werden kann. Ähnlich wie im Ausführungsbeispiel gemäß Fig. 3 kann auch hier optional vorgesehen sein, dass ein Satelittenortungssignal, beispielsweise ein GPS-Signal, ein DGPS(Differential-GPS)-Signal, ein Glonass-Signal oder ein Eureka-Signal gemäß Schritt S24 zur Verfügung gestellt wird und dieses zusätzlich zur exakten Lokalisierung des Fahrzeugs im Fahrzeugumfeld verwendet wird. Wurde die Lokalisierung des Fahrzeugs gemäß Schritt S23 durchgeführt, so wird im folgenden Schritt S25 in den Umfelddaten ermittelt, ob bestimmte Objektmerkmale mehrfach vorhanden sind. Diese Objektmerkmale können Objektdaten hinsichtlich Zebrastreifenbalken 16 hinsichtlich Fahrspurmarkierungen 19, bezüglich Leitpfosten 20, bezüglich Fahrtrichtungspfeilen 21, bezüglich Leitplankenabschnitten 17 oder Leitplankenpfosten 18 sein. Werden derartige Objekte in den Umfelddaten mehrfach festgestellt, so werden deren Umfelddaten nur einmal übertragen und hinsichtlich der erneut vorkommenden Position in den Umfelddaten nur deren erneute Position übertragen, wodurch eine Datenreduktion erreicht wird. Im darauffolgenden Schritt S26 können die erfindungsgemäß reduzierten Umfelddaten mittels einer Sendeeinrichtung 10 an andere Verkehrsteilnehmer direkt weitergeleitet werden oder über einen Verkehrsinfrastrukturdienst mittels eines externen Datenservers diese indirekt an andere Verkehrsteilnehmer weitergeleitet werden, indem diese Daten aktualisiert und für diese anderen Verkehrsteilnehmer bereitgehalten werden, die die gleiche Fahrzeugumgebung zu einem späteren Zeitpunkt passieren werden.

## Patentansprüche

1. Verfahren zur Lokalisierung eines Fahrzeugs in seinem Umfeld, wobei das Fahrzeug über Umfeldsensoren (3, 4) verfügt, die zu ersten Zeitpunkten Umgebungsansichten (14) mittels der Umfeldsensoren (3, 4) erfassen und einer Auswerteeinrichtung (1) zuführen, wobei das Fahrzeug über eine Kommunikationsschnittstelle (5, 10) verfügt, über die der Auswerteeinrichtung (1) aktuelle Umfelddaten (S13, S22) zu zweiten Zeitpunkten bezüglich des momentanen Fahrzeugumfeldes des Fahrzeugs übertragen werden und die Lokalisierung des Fahrzeugs dadurch erfolgt, dass in der Auswerteeinrichtung (1) Umfelddaten (S11, S21), die durch die Umfeldsensoren (3, 4) zu ersten Zeitpunkten erfasst wurden und zeitlich korrespondierenden Umfelddaten (S13, S22), die über die Kommunikationsschnittstelle (5, 10) übertragen wurden, miteinander überlagert werden, **dadurch gekennzeichnet,**
**dass** Merkmale in den mittels der Sensoren (3, 4) erfassten Umgebungsansichten (14) und/oder Merkmale in den über die Kommunikationsschnittstelle (5) zugeführten Umgebungsdaten, die mehrfach in den zu einem Zeitpunkt gehörende Daten vorkommen und ein oder mehrere Objekte (16, 17, 18, 19, 20, 21) repräsentieren, nur einmal übertragen werden und bei wiederholtem Auftreten der Merkmale in den zu einem Zeitpunkt gehörenden Daten nur Positionsdaten des wiederholt auftretenden Objekts (16, 17, 18, 19, 20, 21) erneut übertragen werden.

2. Verfahren nach Anspruch 1, **dadurch gekennzeichnet, dass** es sich bei den mehrfach in einer Sensoransicht (14) vorhandenen Merkmalen um
Zebrastreifenbalken (16),
Leitplankenabschnitte (17),
Leitplankenständer (18),
unterbrochene Fahrstreifenmarkierungen (19),
Leitpfosten (20),
Richtungspfeile auf der Fahrbahn (21)
handelt.

3. Verfahren nach Anspruch 1 oder 2, **dadurch gekennzeichnet, dass** die häufig und regelmäßig auftretenden Merkmale (15, 17, 18, 19, 20, 21) in den Sensordaten (14) mittels eines auf das eine oder mehrere Objekte angepasstes Filter, insbesondere mittels eines Kammfilters, ermittelt werden.

4. Verfahren nach einem der vorhergehenden Ansprüche, **dadurch gekennzeichnet, dass** die ersten Zeitpunkte und die zweiten Zeitpunkte identisch sind.

5. Verfahren nach einem der vorhergehenden Ansprüche, **dadurch gekennzeichnet, dass** das Verfahren zusätzlich ein GPS-Signal (6, S16, S24) oder ein Differential-GPS-Signal (6, S16, S24) verwendet.

6. Verfahren nach einem der vorhergehenden Ansprüche, **dadurch gekennzeichnet, dass** die Umfelddaten (14) von einer Sensorik (3, 4) erfasst werden, die eine Radarsensorik, eine Lidarsensorik, eine Videosensorik, eine Ultraschallsensorik oder eine Kombination aus diesen Sensorarten ist.

7. Verfahren nach einem der vorhergehenden Ansprüche, **dadurch gekennzeichnet, dass** die aktuellen Umgebungsdaten (S13, S22), die über die Kommunikationsschnittstelle (5) an das Fahrzeug übertragen werden Umfelddaten sind, die von Fahrzeugsensoriken von Fahrzeugen erfasst wurden, die vorher die gleiche Fahrzeugumgebung befuhren und noch immer aktuell sind.

8. Verfahren nach einem der vorhergehenden Ansprüche, **dadurch gekennzeichnet, dass** die Kommunikationsschnittstelle (5, 10) eine Mobilfunkverbindung oder ein digitales Rundfunknetz oder ein Fahrzeug-zu-Infrastruktur-Netzwerk (C2C) oder ein Fahrzeug-zu-Fahrzeug-Netzwerk (C2I) oder eine Schnittstelle zu einem Navigationssystem, vorzugsweise mit im Fahrzeug gespeicherter digitaler Karte, oder eine Schnittstelle zu einer Datencloud ist.

9. Vorrichtung zur Lokalisierung eines Fahrzeugs in seinem Umfeld, wobei das Fahrzeug über Umfeldsensoren (3, 4) verfügt, die zu ersten Zeitpunkten Umgebungsansichten (14) mittels der Umfeldsensoren (3, 4) erfassen und einer Auswerteeinrichtung (1) zuführen, wobei das Fahrzeug über eine Kommunikationsschnittstelle (5, 10) verfügt, über die der Auswerteeinrichtung (1) aktuelle Umfelddaten (S13, S22) zu zweiten Zeitpunkten bezüglich des momentanen Fahrzeugumfeldes des Fahrzeugs übertragen werden, und die Lokalisierung des Fahrzeugs dadurch erfolgt, dass in der Auswerteeinrichtung (1) Umfelddaten (S11, S21), die durch die Umfeldsensoren (3, 4) zu ersten Zeitpunkten erfasst wurden und zeitlich korrespondierenden Umfelddaten (S13, S22), die über die Kommunikationsschnittstelle (5, 10) übertragen wurden, miteinander überlagert werden, **dadurch gekennzeichnet, dass** die Auswerteeinrichtung (1) ausgebildet ist zu erfassen, ob Merkmale in den mittels der Sensoren (3, 4) erfassten Umgebungsansichten (14) und/oder Merkmale in den über die Kommunikationsschnittstelle (5, 10) zugeführten Umgebungsdaten, mehrfach in den zu einem Zeitpunkt gehörende Daten vorkommen und ein oder mehrere Objekte (16, 17, 18, 19, 20, 21) repräsentieren, und nur einmal übertragen werden und bei wiederholtem Auftreten der Merkmale (16, 17, 18, 19, 20, 21) in den zu einem Zeitpunkt gehörenden Daten nur Positionsdaten des wiederholt auftretenden Objekts erneut übertragen werden.

## Claims

1. Method for locating a vehicle in its environment, wherein the vehicle has environment sensors (3, 4) which capture views of the environment (14) at first times by means of the environment sensors (3, 4) and supply them to an evaluation device (1), wherein the vehicle has a communication interface (5, 10) via which current environment data (S13, S22) at second times relating to the instantaneous vehicle environment of the vehicle are transmitted to the evaluation device (1), and the vehicle is located by superimposing, in the evaluation device (1), environment data (S11, S21) captured by the environment sensors (3, 4) at first times and temporally corresponding environment data (S13, S22) which have been transmitted via the communication interface (5, 10), **characterized**
**in that** features in the views of the environment (14) captured by means of the sensors (3, 4) and/or features in the environment data supplied via the communication interface (5) which repeatedly occur in the data belonging to a time and represent one or more objects (16, 17, 18, 19, 20, 21) are transmitted only once and, if the features repeatedly occur in the data belonging to a time, only position data relating to the repeatedly occurring object (16, 17, 18, 19, 20, 21) are transmitted again.

2. Method according to Claim 1, **characterized in that** the features which are repeatedly present in a sensor view (14) are
pedestrian crossing strips (16),
crash barrier sections (17),
crash barrier posts (18),
interrupted lane markings (19),
reflector posts (20),
direction arrows on the road (21).

3. Method according to Claim 1 or 2, **characterized in that** the features (15, 17, 18, 19, 20, 21) which occur frequently and regularly in the sensor data (14) are determined by means of a filter adapted to the one or more objects, in particular by means of a comb filter.

4. Method according to one of the preceding claims, **characterized in that** the first times and the second times are identical.

5. Method according to one of the preceding claims, **characterized in that** the method additionally uses a GPS signal (6, S16, S24) or a differential GPS signal (6, S16, S24).

6. Method according to one of the preceding claims, **characterized in that** the environment data (14) are captured by a sensor system (3, 4) which is a radar sensor system, a lidar sensor system, a video sensor system, an ultrasonic sensor system or a combination of these types of sensor.

7. Method according to one of the preceding claims, **characterized in that** the current environment data (S13, S22) which are transmitted to the vehicle via the communication interface (5) are environment data which have been captured by vehicle sensor systems of vehicles, which previously drove along the same vehicle environment, and are still current.

8. Method according to one of the preceding claims, **characterized in that** the communication interface (5, 10) is a mobile radio connection or a digital broadcasting network or a vehicle-to-infrastructure network (C2C) or a vehicle-to-vehicle network (C2I) or an interface to a navigation system, preferably with a digital map stored in the vehicle, or an interface to a data cloud.

9. Apparatus for locating a vehicle in its environment, wherein the vehicle has environment sensors (3, 4) which capture views of the environment (14) at first times by means of the environment sensors (3, 4) and supply them to an evaluation device (1), wherein the vehicle has a communication interface (5, 10) via which current environment data (S13, S22) at second times relating to the instantaneous vehicle environment of the vehicle are transmitted to the evaluation device (1), and the vehicle is located by superimposing, in the evaluation device (1), environment data (S11, S21) captured by the environment sensors (3, 4) at first times and temporally corresponding environment data (S13, S22) which have been transmitted via the communication interface (5, 10), **characterized**
**in that** the evaluation device (1) is designed to capture whether features in the views of the environment (14) captured by means of the sensors (3, 4) and/or features in the environment data supplied via the communication interface (5, 10) repeatedly occur in the data belonging to a time and represent one or more objects (16, 17, 18, 19, 20, 21) and are transmitted only once and, if the features (16, 17, 18, 19, 20, 21) repeatedly occur in the data belonging to a time, only position data relating to the repeatedly occurring object are transmitted again.

## Revendications

1. Procédé pour localiser un véhicule dans son environnement, dans lequel le véhicule dispose de capteurs d'environnement (3, 4) qui, à des premiers instants, détectent des vues de l'environnement (14) au moyen des capteurs d'environnement (3, 4) et les envoient à un dispositif d'évaluation (1), dans lequel le véhicule dispose d'une interface de communication (5, 10) par l'intermédiaire de laquelle, à des deuxièmes instants, des données d'environnement actuelles (S13, S22) relatives à l'environnement actuel du véhicule sont transmises au dispositif d'évaluation (1), et la localisation du véhicule s'effectue en faisant en sorte que, dans le dispositif d'évaluation (1), des données d'environnement (S11, S21) détectées par les capteurs d'environnement (3, 4) aux premiers instants et des données d'environnement (S13, S22) correspondant dans le temps et transmises par l'intermédiaire de l'interface de communication (5, 10) soient superposées les unes aux autres,
**caractérisé en ce que** des caractéristiques présentes dans les vues de l'environnement (14) et détectées au moyen des capteurs (3, 4) et/ou des caractéristiques présentes dans les données d'environnement envoyées par l'intermédiaire de l'interface de communication (5), qui apparaissent plusieurs fois dans les données correspondant à un instant et qui représentent un ou plusieurs objets (16, 17, 18, 19, 20, 21), ne sont transmises qu'une seule fois et que, lors que les caractéristiques apparaissent de manière répétée dans les données correspondant à un instant, seules les données de position de l'objet (16, 17, 18, 19, 20, 21) qui apparaissent de manière répétée sont à nouveau transmises.

2. Procédé selon la revendication 1, **caractérisé en ce que** les caractéristiques qui sont présentes plusieurs fois dans une vue de capteur (14) sont
des bandes de passage pour piétons (16),
des sections de glissières de sécurité (17),
des supports de glissières de sécurité (18),
des marquages de voie discontinus (19),
des délinéateurs (20),
des flèches de direction sur la chaussée (21).

3. Procédé selon la revendication 1 ou 2, **caractérisé en ce que** les caractéristiques (15, 17, 18, 19, 20, 21) apparaissant fréquemment et régulièrement dans les données de capteurs (14) sont déterminées au moyen d'un filtre adapté audits un ou plusieurs objets, en particulier au moyen d'un filtre en peigne.

4. Procédé selon l'une des revendications précédentes, **caractérisé en ce que** les premiers instants et les deuxièmes instants sont identiques.

5. Procédé selon l'une des revendications précédentes, **caractérisé en ce que** le procédé utilise en outre un signal GPS (6, S16, S24) ou un signal GPS différentiel (6, S16, S24).

6. Procédé selon l'une des revendications précédentes, **caractérisé en ce que** les données d'environnement (14) sont acquises par un système de capteurs (3, 4) qui est un système de capteurs radar, un système de capteurs lidar, un système de capteurs vidéo, un système de capteurs à ultrasons ou une combinaison de ces types de capteurs.

7. Procédé selon l'une des revendications précédentes, **caractérisé en ce que** les données d'environnement actuelles (S13, S22) qui sont transmises au véhicule par l'intermédiaire de l'interface de communication (5) sont des données d'environnement ayant été détectées par des capteurs pour véhicules installés sur des véhicules qui se sont déplacés auparavant dans le même environnement de véhicule et qui sont encore actuelles.

8. Procédé selon l'une des revendications précédentes, **caractérisé en ce que** l'interface de communication (5, 10) est une connexion radio mobile ou un réseau radio numérique ou un réseau de véhicule à infrastructure (C2C) ou un réseau de véhicule à véhicule (C2I) ou une interface avec un système de navigation, de préférence avec une carte numérique stockée dans le véhicule, ou une interface avec un nuage de données.

9. Dispositif pour localiser un véhicule dans son environnement, dans lequel le véhicule dispose de capteurs d'environnement (3, 4) qui, à des premiers instants, détectent des vues de l'environnement (14) au moyen des capteurs d'environnement (3, 4) et les envoient à un dispositif d'évaluation (1), dans lequel le véhicule dispose d'une interface de communication (5, 10) par l'intermédiaire de laquelle, à des deuxièmes instants, des données d'environnement actuelles (S13, S22) relatives à l'environnement actuel du véhicule sont transmises au dispositif d'évaluation (1), et la localisation du véhicule s'effectue en faisant en sorte que, dans le dispositif d'évaluation (1), des données d'environnement (S11, S21) détectées par les capteurs d'environnement (3, 4) aux premiers instants et des données d'environnement (S13, S22) correspondant dans le temps et transmises par l'intermédiaire de l'interface de communication (5, 10) soient superposées les unes aux autres,
**caractérisé en ce que** le dispositif d'évaluation (1) est conçu pour détecter si des caractéristiques présentes dans les vues de l'environnement (14) détectées au moyen des capteurs (3, 4) et/ou si des caractéristiques présentes dans les données d'environnement et envoyées par l'intermédiaire de l'interface de communication (5, 10), apparaissent plusieurs fois dans les données correspondant à un premier instant et représentent un ou plusieurs objets (16, 17, 18, 19, 20, 21), et ne sont transmises qu'une seule fois et que, lorsque les caractéristiques (16, 17, 18, 19, 20, 21) apparaissent de manière répétée dans les données correspondant à un instant, seules les données de position de l'objet qui apparaissent de manière répétée sont à nouveau transmises.
